(19) Europäisches Patentamt
European Patent Office
Office européen des brevets

(11) EP 4 628 198 A1

(12) **EUROPEAN PATENT APPLICATION**
published in accordance with Art. 153(4) EPC

(43) Date of publication:
08.10.2025 Bulletin 2025/41

(21) Application number: 22967175.5

(22) Date of filing: 30.11.2022

(51) International Patent Classification (IPC):
B01D 63/02 (2006.01)    C02F 3/00 (2023.01)
C02F 3/34 (2023.01)

(52) Cooperative Patent Classification (CPC):
B01D 63/02; C02F 3/00; C02F 3/34; Y02W 10/10

(86) International application number:
PCT/JP2022/044226

(87) International publication number:
WO 2024/116342 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Mitsubishi Chemical Corporation
Tokyo 100-8251 (JP)

(72) Inventors:
• KIGO Yunje
  Tokyo 100-8251 (JP)
• SUZUKI Takaaki
  Tokyo 100-8251 (JP)
• SHINODA Ami
  Tokyo 100-8251 (JP)

(74) Representative: Hoffmann Eitle
Patent- und Rechtsanwälte PartmbB
Arabellastraße 30
81925 München (DE)

(54) **HOLLOW FIBER MEMBRANE, HOLLOW FIBER MEMBRANE MODULE, WASTEWATER TREATMENT DEVICE, AND WASTEWATER TREATMENT METHOD**

(57) An object of the present invention is to provide a hollow fiber membrane, a hollow fiber membrane module, a wastewater treatment device, and a wastewater treatment method that can improve wastewater treatment capacity by MABR. In the treatment of wastewater W by a wastewater treatment device (100), as a hollow fiber membrane (1) included in a hollow fiber membrane module (10), a hollow fiber membrane for wastewater treatment, in which a microorganism layer derived from microorganisms or bacteria in the wastewater W is formed on a surface during the wastewater treatment, an arithmetic average roughness (SRa) of the surface is 25 nm or more, and an initial tensile resistance obtained in accordance with JIS L 1013:2010 is 0.5 to 20 cN/dtex, is used.

FIG. 1

EP 4 628 198 A1

**Description**

TECHNICAL FIELD

The present invention relates to a hollow fiber membrane, a hollow fiber membrane module, a wastewater treatment device, and a wastewater treatment method.

BACKGROUND ART

Industrial wastewater or domestic wastewater is re-used as industrial water after being subjected to treatment for removing organic substances and the like, contained in the wastewater, or is discharged into a river or the like. Examples of a treatment method for the industrial wastewater or the like generally include an activated sludge treatment method in which water to be treated is aerated to decompose the organic substances and the like by aerobic microorganisms. In such a biological water treatment method typified by the activated sludge treatment method, aerobic microorganisms, denitrifying bacteria for removing nitrate nitrogen, and the like are used.

In the activated sludge treatment method in the related art, a nitrification tank using the aerobic microorganisms and a denitrification tank using the denitrifying bacteria as anaerobic microorganisms are provided, and oxygen is supplied by aeration in the nitrification tank. However, the treatment method has a problem in that equipment is large because the nitrification tank and the denitrification tank are separately installed. In addition, in the oxygen supply by aeration, even when the size of air bubbles is reduced and the surface area of the air bubbles is increased to improve contact efficiency or to increase retention time in water to be treated, oxygen utilization efficiency has a limit, and a running cost is high.

Therefore, a so-called membrane aeration type biofilm reactor (MABR) in which a microorganism layer (biofilm) derived from microorganisms in wastewater is formed on a surface of a hollow fiber membrane and oxygen is supplied from the inner surface side of the hollow fiber membrane has been proposed for wastewater treatment (Patent Document 1). In the wastewater treatment by MABR, an oxygen gradient is formed in a film thickness direction of the microorganism layer, aerobic treatment (BOD oxidation and nitration of ammonia) proceeds on the inner layer side of the microorganism layer, and anaerobic treatment of nitric acid (BOD oxidation and denitrification treatment) proceeds on the outer layer side of the microorganism layer. As described above, since the aerobic treatment and the anaerobic treatment can be performed in the same treatment tank, the equipment can be made more compact than in the treatment methods in the related art. In addition, since oxygen is supplied from the inner surface side of the hollow fiber membrane, the oxygen utilization efficiency is higher than that in aeration, and the running cost can be reduced.

Citation List

Patent Document

Patent Document 1:Japanese Unexamined Patent Application, First Publication No. 2021-62331

SUMMARY OF INVENTION

Technical Problem

In the wastewater treatment method using MABR as in Patent Document 1, it is important to more stably form a microorganism layer on the surface of the hollow fiber membrane to enhance wastewater treatment capacity.

An object of the present invention is to provide a hollow fiber membrane, a hollow fiber membrane module, a wastewater treatment device, and a wastewater treatment method that can improve wastewater treatment capacity by MABR.

Solution to Problem

The present inventors have conducted intensive studies, and have found that a physical surface structure of the hollow fiber membrane and flexibility of the hollow fiber membrane capable of a supple movement in wastewater greatly affect adhesiveness of a microorganism layer to the surface of the hollow fiber membrane, thereby completing the present invention.

That is, the present invention includes the following aspects.

[1] A hollow fiber membrane for wastewater treatment, in which a microorganism layer derived from microorganisms or bacteria in wastewater is formed on a surface during the wastewater treatment,

wherein an arithmetic average roughness (SRa) of the surface measured by the following arithmetic average roughness measuring method is 25 nm or more, and
an initial tensile resistance obtained in accordance with JIS L 1013:2010 is 0.5 to 20 cN/dtex,
(arithmetic average roughness measuring method)
an uneven shape of the surface of the hollow fiber membrane is measured using a scanning probe microscope (SPM), a cross-sectional curved surface of the hollow fiber membrane is denoted as y = f(x, y), and the arithmetic average roughness (SRa) is obtained by obtaining an absolute value average of f(x, y) from the following expression (1).

$$\text{SRa} = \frac{1}{LM} \int_0^M \int_0^L |f(x, y)| dx dy \quad \cdots \text{(1)}$$

(in expression (1), L is a length in an x direction in the cross-sectional curved surface, and M is a length in a y direction in the cross-sectional curved surface)

[2] The hollow fiber membrane according to [1],
wherein the hollow fiber membrane consists of a material containing a polyolefin resin.
[3] The hollow fiber membrane according to [2],
wherein the polyolefin resin is a polyethylene resin.
[4] The hollow fiber membrane according to [3],
wherein the polyethylene resin is low-density polyethylene.
[5] The hollow fiber membrane according to any one of [1] to [4],
wherein the hollow fiber membrane is a monolayer membrane consisting of a non-porous layer.
[6] The hollow fiber membrane according to any one of [1] to [5],
wherein the outer diameter is 1 mm or less.
[7] A hollow fiber membrane module, comprising:
the hollow fiber membrane according to any one of [1] to [6].
[8] A wastewater treatment device, comprising:
the hollow fiber membrane module according to [7].
[9] A wastewater treatment method for treating wastewater using the hollow fiber membrane module according to [7] or the wastewater treatment device according to [8], the wastewater treatment method comprising:

forming the microorganism layer derived from microorganisms or bacteria in wastewater on a surface of the hollow fiber membrane; and
supplying a gas containing oxygen to a hollow portion of the hollow fiber membrane.

Advantageous Effects of Invention

According to the present invention, it is possible to provide a hollow fiber membrane, a hollow fiber membrane module, a wastewater treatment device, and a wastewater treatment method that can improve wastewater treatment capacity by MABR.

BRIEF DESCRIPTION OF DRAWINGS

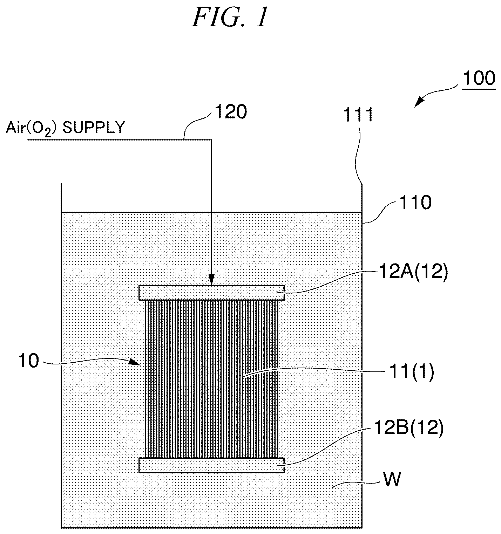

[FIG. 1] A schematic view representing an overall configuration of a device including a treatment tank for wastewater, for schematically describing an embodiment of a hollow fiber membrane module, a wastewater treatment device, and a wastewater treatment method according to the present invention.

DESCRIPTION OF EMBODIMENTS

[Hollow fiber membrane]

The hollow fiber membrane according to the embodiment of the present invention is a hollow fiber membrane for wastewater treatment, in which a microorganism layer derived from microorganisms or bacteria in wastewater is formed on a surface during the wastewater treatment. That is, the hollow fiber membrane according to the embodiment of the present invention is a hollow fiber membrane used for wastewater treatment by MABR, and is configured to be capable of permeating oxygen from the inner surface side toward the surface by supplying oxygen to a hollow portion.

Hereinafter, one embodiment of the hollow fiber membrane according to the present invention will be described in detail.

**In** the hollow fiber membrane according to the embodiment of the present invention, an arithmetic average roughness (SRa) of the surface measured by an arithmetic average roughness measuring method described later is 25 nm or more, and an initial tensile resistance obtained in accordance with JIS L 1013:2010 is 0.5 to 20 cN/dtex. Since the hollow fiber membrane satisfying such physical properties has excellent adhesiveness of a microorganism layer (biofilm) to the surface, wastewater treatment capacity of MABR can be improved.

(Arithmetic average roughness measuring method)

The arithmetic average roughness (SRa) of the surface of the hollow fiber membrane is obtained by the following method.

An uneven shape of the surface (outer surface) of the hollow fiber membrane is measured using a scanning probe microscope (SPM), a cross-sectional curved surface of the hollow fiber membrane is denoted as y = f(x, y), and the arithmetic average roughness (SRa) is obtained by obtaining an absolute value average of f(x, y) from the following expression (1).

$$\mathrm{SRa} = \frac{1}{LM} \int_0^M \int_0^L |f(x,y)| \, dx \, dy \quad \cdots (1)$$

**In** expression (1), L is a length in an x direction in the cross-sectional curved surface, and M is a length in a y direction in the cross-sectional curved surface.

The arithmetic average roughness (SRa) of the surface of the hollow fiber membrane is 25 nm or more, preferably 30 nm or more. When the SRa of the surface of the hollow fiber membrane is equal to or more than the above-described lower limit value, the adhesiveness of the microorganism layer to the surface of the hollow fiber membrane is improved, and thus the wastewater treatment capacity of MABR is improved. The SRa of the surface of the hollow fiber membrane is preferably 1,000 nm or less, more preferably 500 nm or less, still more preferably 300 nm or less, and particularly preferably 100 nm or less. When the SRa of the surface of the hollow fiber membrane is equal to or less than the above-described upper limit value, a uniform microorganism layer is likely to be formed on the surface of the hollow fiber membrane, and thus high wastewater treatment capacity is likely to be obtained. The lower limit and the upper limit of the SRa of the surface of the hollow fiber membrane can be optionally combined, and for example, 25 to 1,000 nm is preferable.

The arithmetic average roughness (SRa) of the surface of the hollow fiber membrane can be adjusted by the stretching ratio of the hollow fiber membrane, a material constituting the hollow fiber membrane, and the like.

The "arithmetic average roughness ((SRa)) of the surface of the hollow fiber membrane" refers to an average value of arithmetic average roughnesses (SRa) randomly measured at at least three or more sites on a single surface of the hollow fiber membrane.

In the present invention, the initial tensile resistance is used as an index of flexibility of the hollow fiber membrane.

The initial tensile resistance (cN/dtex) of the hollow fiber membrane is obtained in accordance with "8.10 Initial tensile resistance" of JIS L 1013:2010. Tensile test conditions when measuring the tensile strength (cN) are set to a gripping interval of 100 mm and a tensile speed of 50 mm/min. For the measurement of a specific fiber fineness (tex), method B of "8.3.1 Specific fiber fineness" is used, and the specific fiber fineness is calculated by applying an initial load, taking 20 samples having a length of 50 cm, and measuring the dry mass thereof.

The initial tensile resistance of the hollow fiber membrane is 0.5 cN/dtex or more, preferably 0.8 cN/dtex or more, and more preferably 1.5 cN/dtex or more. When the initial tensile resistance of the hollow fiber membrane is equal to or more than the above-described lower limit value, a surface shape of the hollow fiber membrane is suppressed from being significantly changed by swelling or elongation, and thus the adhesiveness of the microorganism layer to the surface of the hollow fiber membrane is improved. The initial tensile resistance of the hollow fiber membrane is 20 cN/dtex or less, preferably 15 cN/dtex or less, and more preferably 10 cN/dtex or less. When the initial tensile resistance of the hollow fiber membrane is equal to or less than the above-described upper limit value, the hollow fiber membrane has sufficient flexibility and gently moves in the wastewater, and thus the microorganisms are likely to adhere to the surface of the hollow fiber membrane. The lower limit and the upper limit of the initial tensile resistance of the surface of the hollow fiber membrane can be optionally combined, and for example, 0.5 to 20 cN/dtex is preferable.

The initial tensile resistance of the hollow fiber membrane can be adjusted by a layer configuration of the hollow fiber membrane, the material constituting the hollow fiber membrane, and the like.

The material constituting the hollow fiber membrane is not particularly limited, and examples thereof include a polyolefin resin, a polystyrene resin, a polyurethane resin, and a fluororesin. Among the above, from the viewpoint of oxygen permeability, a polyolefin resin is preferable, a polyethylene resin is more preferable, and low-density polyethylene is still more preferable. One or two or more kinds of the material constituting the hollow fiber membrane may be used.

The shape of the hollow fiber membrane is not particularly limited, and examples thereof include a substantially cylindrical shape. However, the term "substantially cylindrical shape" means a three-dimensional shape in which the shape of any cross section perpendicular to the longitudinal direction is an oval shape such as a perfect circular shape, an egg shape, an elongated circular shape, and an elliptical shape.

The outer diameter of the hollow fiber membrane is preferably 1 mm or less and more preferably 0.8 mm or less. When the outer diameter of the hollow fiber membrane is equal to or less than the above-described upper limit value, it is possible to suppress a decrease in filling amount of the hollow fiber membrane when forming a membrane module. The outer diameter of the hollow fiber membrane is preferably 0.05 mm or more, more preferably 0.1 mm or more, and still more preferably 0.2 mm or more. When the outer diameter of the hollow fiber membrane is equal to or more than the above-described lower limit value, the inner diameter of the hollow portion can be sufficiently secured, and thus the influence of a decrease in flow rate of oxygen flowing through the hollow portion due to pressure loss or the like can be reduced. The lower limit and the upper limit of the outer diameter of the hollow fiber membrane can be optionally combined, and for example, 0.05 to 1 mm is preferable.

The outer diameter of the hollow fiber membrane means a diameter of a minimum circle inscribed in the outer edge of a cut surface when the hollow fiber membrane is cut in any plane perpendicular to a longitudinal direction of the hollow fiber membrane, and is obtained as an average value measured at any 3 or more points and 10 or fewer points.

From the viewpoint that the flexibility is improved and the adhesiveness of the microorganism layer to the surface of the membrane is improved, the hollow fiber membrane is preferably a monolayer membrane consisting of a non-porous layer.

The material constituting a non-porous layer is preferably a polystyrene resin or a polyolefin resin, more preferably a polyolefin resin, still more preferably a polyethylene resin, and particularly preferably low-density polyethylene. When the non-porous layer consists of a material containing one or more of the above-described resins, it is possible to increase the mechanical strength of the entire hollow fiber membrane while ensuring sufficient oxygen permeability. One or two or more kinds of the material constituting the non-porous layer may be used.

[Hollow fiber membrane module and wastewater treatment device]

Hereinafter, an example of a hollow fiber membrane module and a wastewater treatment device according to the embodiment of the present invention will be described.

A wastewater treatment device 100 according to the present embodiment, shown in FIG. 1, is schematically configured to include a hollow fiber membrane module 10 in a single unit or in a state of a plurality of units. In the wastewater treatment device 100 in the shown example, the hollow fiber membrane module 10 is accommodated inside a treatment tank 110.

The treatment tank 110 accommodates wastewater W to be treated. As the treatment tank 110, for example, a treatment tank used in the related art, such as a large metal container, can be adopted without any limitation. In addition, although a detailed description is not shown in FIG. 1, a wastewater introduction pipe to accommodate the wastewater to be treated inside the treatment tank 110, and a discharge pipe for discharging treated water that has been subjected to the treatment to the outside of the treatment tank are connected to the treatment tank 110.

The hollow fiber membrane module 10 is roughly configured with a housing 12 (an upper housing 12A and a lower housing 12B), and a hollow fiber membrane sheet type article 11 in which a plurality of the hollow fiber membranes 1 are bundled in a sheet shape. As the hollow fiber membrane 1, the above-described hollow fiber membrane according to the embodiment of the present invention is used.

The hollow fiber membrane module 10 of the example is disposed in the treatment tank 110 such that a longitudinal direction of the hollow fiber membrane 1 is set to a vertical direction and the hollow fiber membrane 1 is immersed in the wastewater W. As a result, condensed water (moisture contained in oxygen, air, or the like, or water condensed in the membrane from water contained in the wastewater) is less likely to accumulate inside the hollow fiber membrane 1, and the wastewater treatment capacity can be maintained more satisfactorily.

The upper housing 12A is a substantially hollow member disposed on an upper side of the hollow fiber membrane sheet type article 11. An upper end portion of the hollow fiber membrane sheet type article 11 is inserted into the upper housing 12A, and the upper end portion is fixed to the upper housing 12A in a state in which an end surface of each hollow fiber membrane 1 is open. The lower housing 12B is a substantially hollow member disposed on a lower side of the hollow fiber membrane sheet type article 11. A lower end portion of the hollow fiber membrane sheet type article 11 is inserted into the lower housing 12B, and the lower end portion is fixed to the lower housing 12B in a state in which an end surface of each hollow fiber membrane 1 is open. As a result, the hollow fiber membrane sheet type article 11 between the upper housing 12A and the lower housing 12B can be held in a sheet shape.

In the hollow fiber membrane module 10, it is preferable that a pair of support columns connecting both end portions of the upper housing 12A and the lower housing 12B to each other be provided. By providing a pair of support columns to keep an interval between the upper housing 12A and the lower housing 12B constant, a flat hollow fiber membrane module 10 can be configured while maintaining the surface form of the hollow fiber membrane sheet type article 11.

The hollow fiber membrane module 10 is not limited to a flat shape, and can be configured in, for example, a cylindrical shape or a rectangular tubular shape.

A gas supply line 120 is connected to the upper housing 12A, and is configured to supply oxygen, air, or the like from a blower (not shown) to the inside of the upper housing 12A. Oxygen, air, or the like supplied into the hollow portion of each hollow fiber membrane 1 through the upper housing 12A permeates from the inner surface side of each hollow fiber membrane 1 to the outer surface side.

An aeration device (not shown) may be disposed below the hollow fiber membrane module 10.

[Wastewater treatment method]

The wastewater treatment method according to the present embodiment treats wastewater using the hollow fiber membrane module 10 according to the present embodiment or the wastewater treatment device 100 according to the present embodiment, as shown in FIG. 1.

Specifically, in the wastewater treatment method according to the present embodiment, first, the wastewater W to be treated is introduced into the treatment tank 110. In this case, the inside of the treatment tank 110 is filled with the wastewater W so that the hollow fiber membrane module 10 disposed in the treatment tank 110 is immersed in the wastewater W.

Next, oxygen or air is supplied to the hollow fiber membrane module 10 from the blower (not shown) through the gas supply line 120, thereby allowing the oxygen or air to permeate from the hollow portion of the hollow fiber membrane 1 to the surface. In the initial stage of such wastewater treatment of the present embodiment, microorganisms, bacteria, and the like present in the wastewater W adhere to the surface of each hollow fiber membrane 1, and a microorganism layer derived from microorganisms or bacteria is formed.

The microorganism layer derived from microorganisms or bacteria may be formed on the surface of the hollow fiber membrane 1 in advance by immersing the hollow fiber membrane module in a solution obtained by proliferating microorganisms or bacteria using activated sludge already used in another wastewater treatment plant or the like as a seed and adjusting the concentration thereof to a predetermined concentration. The activated sludge has various component configurations and proportions depending on the type of wastewater, but it is possible to use activated sludge obtained by using BOD (organic substance) components and nutrients (nitrogen, phosphorus, and the like) contained in the wastewater as food and carrying out the proliferation.

By continuing the supply of oxygen or air to the hollow fiber membrane module 10, the oxygen that has permeated from the hollow portion of each hollow fiber membrane 1 to the surface side is dissolved and diffused in the microorganism layer, and an oxygen gradient (concentration) is formed in a film thickness direction of the microorganism layer. The inner layer side of the microorganism layer is in an oxygen-rich aerobic state, while the outer layer side is in an oxygen-depleted anaerobic state. As a result, in the microorganism layer, an aerobic treatment region is formed on the inner layer side, and an anaerobic treatment region is formed on the outer layer side.

In the aerobic treatment region, oxidation of ammonia contained in the wastewater proceeds by aerobic treatment (BOD oxidation), and thus the ammonia is nitrated. In the anaerobic treatment region, nitric acid generated in the aerobic treatment region is treated as nitrogen by anaerobic treatment (BOD oxidation) and denitrified. In this way, both the aerobic treatment and the anaerobic treatment are performed in the treatment tank 110 in one process.

Air in the atmosphere may be supplied to each hollow fiber membrane 1 of the hollow fiber membrane module 10, but it is preferable that pure oxygen be supplied. By supplying oxygen having high purity, the oxygen concentration dissolved and diffused in the microorganism layer is likely to be sufficient, and thus the wastewater treatment capacity is improved. It is preferable to use the atmosphere from the viewpoint that the running cost can be reduced. In the hollow fiber membrane module 10, for example, a gas in which a component compositional ratio of air in the atmosphere is changed by separation or concentration may be supplied according to the characteristics of the wastewater to be treated.

The pressure of the gas (oxygen or air) supplied to each hollow fiber membrane 1 is not particularly limited, but is preferably 200 kPa or less from the viewpoint of easily suppressing damage to the member due to over-supply. From the viewpoint of securing a sufficient wastewater treatment effect, the pressure of the gas supplied to each hollow fiber membrane 1 may be, for example, 5 kPa or more.

The film thickness of the microorganism layer is not particularly limited, and for example, may be adjusted to one at which the optimum aerobic treatment and anaerobic treatment can be performed by carrying out an operation such as air bubbling cleaning when a predetermined thickness or more or a predetermined treatment time is reached.

A gas (high nitrogen concentration gas) containing nitrogen at a high concentration may be supplied from the aeration device disposed below the hollow fiber membrane module 10, and the wastewater W may be aerated. When air bubbles of the high nitrogen concentration gas come into contact with the microorganism layer, the oxygen concentration in the anaerobic treatment region is further decreased, and thus anaerobicity is further increased. In addition, the wastewater W is stirred by air bubbles generated from the aeration device, and the wastewater W is in a complete anaerobic environment, so that anaerobic bacteria are predominant in microbiota of a flock floating in the wastewater W.

After the biological treatment, for example, bubbling treatment using the aeration device (not shown) or the like disposed below the hollow fiber membrane module 10 is performed to peel off the microorganism layer from the hollow fiber membrane 1. Thereafter, the sludge including the peeled-off portion of the microorganism layer is recovered by a solid-liquid separation method with a separation membrane (not shown), and the wastewater treatment is completed.

As described above, in the present invention, by forming the microorganism layer on the surface of the hollow fiber membrane and allowing oxygen to permeate from the inner surface side of the hollow fiber membrane to the surface side and supplying oxygen to the microorganism layer, both aerobic treatment and anaerobic treatment can be performed in the microorganism layer in one process. Therefore, the oxygen utilization efficiency is higher than that in oxygen supply by aeration, and the device can be made compact.

In addition, in the present invention, by using the hollow fiber membrane in which the arithmetic average roughness (SRa) of the surface and the initial tensile resistance satisfy specific conditions, the adhesiveness of the microorganism layer to the surface of the hollow fiber membrane is improved, so that the entire membrane can be effectively utilized, and high wastewater treatment capacity can be obtained. In addition, the adhesion of the microorganism layer to the surface of the hollow fiber membrane is accelerated, the operation can be started early, and the operation can be restored early even when peeling of the microorganism layer occurs.

The present invention is not limited to the embodiments described above. Within a range not departing from the gist of the present invention, it is possible to appropriately substitute the constituent elements in the above-described embodiments with known constituent elements, and the above-described modification examples may be appropriately combined.

The present invention will be specifically described below with reference to Examples, but the present invention is not limited to the following description.

[Arithmetic average roughness (SRa)]

An uneven shape of the surface of a hollow fiber membrane was measured using a scanning probe microscope (SPM), a cross-sectional curved surface of the hollow fiber membrane was denoted as y = f(x, y), and the arithmetic average roughness (SRa) was obtained by obtaining an absolute value average of f(x, y) from expression (1).

The SPM measurement was performed under the following conditions.

Device: SFT-3500 (manufactured by SHIMAZU Corporation)
Measurement mode: dynamic mode
Scanning range: 10 $\mu$m $\times$ 10 $\mu$m (number of pixels: 256 $\times$ 256)
Scanning speed: 1 Hz
Scanning mode: constant force

[Initial tensile resistance]

The initial tensile resistance (cN/dtex) of the hollow fiber membrane was obtained in accordance with "8.10 Initial tensile resistance" of JIS L 1013:2010. Tensile test conditions when measuring the tensile strength (cN) were set to a gripping interval of 100 mm and a tensile speed of 50 mm/min. For the measurement of a specific fiber fineness (tex), method B of "8.3.1 Specific fiber fineness" was used, and the specific fiber fineness was calculated by applying an initial load, taking 20 samples having a length of 50 cm, and measuring the dry mass thereof.

[Maximum nitrification rate]

The wastewater W was treated using the wastewater treatment device 100 shown in FIG. 1. Raw water from a public sewer was used as the wastewater W, and the hollow fiber membrane module 10 was supplied with air under a condition of a pressure of 30 kPa to carry out wastewater treatment for 60 days.

As an index of wastewater treatment capacity, the maximum nitrification rate per membrane surface area was calculated using the following expression (2).

$$NR = \{(NH_4 \text{-}N)_i - (NH_4 \text{-}N)_e\}/A \dots (2)$$

The abbreviations in expression (2) have the following meanings.

NR: maximum nitrification rate [g/m$^2$·d]
$(NH_4\text{-}N)_i$: ammonia nitrogen loading amount of raw water [g/d]
$(NH_4\text{-}N)_e$: ammonia nitrogen loading amount of treated water [g/d]
A: effective membrane area [m$^2$] of hollow fiber membrane

[Example 1]

Melt spinning was carried out using a nozzle cap to manufacture a hollow fiber membrane. Low-density polyethylene (manufactured by Japan Polyethylene Corporation, trade name "HARMOREX N324A") was used as the resin material. The temperature of the discharge port was set to 170°C, and the winding speed was set to 120 m/min. The stretching ratio was set to 0 times. The obtained hollow fiber membrane had an outer diameter of 200 μm, an arithmetic average roughness (SRa) of the surface of 55.5 nm, and an initial tensile resistance of 2.5 cN/dtex.

The hollow fiber membrane was bundled in a sheet shape to form a hollow fiber membrane sheet type article, and both end portions thereof were each inserted into the upper housing and the lower housing, and fixed with a potting resin (manufactured by TOSOH CORPORATION, trade name "CORONATE") to form a hollow fiber membrane module. The effective length of the hollow fiber membrane was 350 mm, and the effective membrane area was 3,200 cm$^2$.

Table 1 shows the results of measuring the maximum nitrification rate by performing wastewater treatment using the obtained hollow fiber membrane module.

[Comparative Example 1]

Melt spinning was carried out using a nozzle cap to manufacture a hollow fiber membrane. High-density polyethylene (manufactured by Asahi Kasei Corporation, trade name "SUNTEC B161") was used as the resin material. The temperature of the discharge port was set to 185°C, and the winding speed was set to 100 m/min. The stretching ratio was set to 4 times. The obtained hollow fiber membrane had an outer diameter of 280 μm, an arithmetic average roughness (SRa) of the surface of 18.0 nm, and an initial tensile resistance of 38 cN/dtex.

The hollow fiber membrane was bundled in a sheet shape to form a hollow fiber membrane sheet type article, and both end portions thereof were each inserted into the upper housing and the lower housing, and fixed with a potting resin (manufactured by TOSOH CORPORATION, trade name "CORONATE") to form a hollow fiber membrane module. The effective length of the hollow fiber membrane was 350 mm, and the effective membrane area was 3,200 cm$^2$.

[Comparative Example 2]

Melt spinning was carried out using a nozzle cap to manufacture a hollow fiber membrane. High-density polyethylene (manufactured by Asahi Kasei Corporation, trade name "SUNTEC B161") was used as the resin material. The temperature of the discharge port was set to 185°C, and the winding speed was set to 146 m/min. The stretching ratio was set to 3 times. The obtained hollow fiber membrane had an outer diameter of 280 μm, an arithmetic average roughness (SRa) of the surface of 21.5 nm, and an initial tensile resistance of 31.9 cN/dtex.

The hollow fiber membrane was bundled in a sheet shape to form a hollow fiber membrane sheet type article, and both end portions thereof were each inserted into the upper housing and the lower housing, and fixed with a potting resin (manufactured by TOSOH CORPORATION, trade name "CORONATE") to form a hollow fiber membrane module. The effective length of the hollow fiber membrane was 350 mm, and the effective membrane area was 3,200 cm$^2$.

[Comparative Example 3]

A commercially available hollow fiber membrane was used. The hollow fiber membrane had an outer diameter of 510 μm, an arithmetic average roughness (SRa) of the surface of 57.5 nm, and an initial tensile resistance of 0.1 cN/dtex.

The hollow fiber membrane was bundled in a sheet shape to form a hollow fiber membrane sheet type article, and both end portions thereof were each inserted into the upper housing and the lower housing, and fixed with a potting resin (manufactured by TOSOH CORPORATION, trade name "CORONATE") to form a hollow fiber membrane module. The effective length of the hollow fiber membrane was 350 mm, and the effective membrane area was 3,200 cm$^2$.

Table 1 shows the arithmetic average roughness (SRa) and the initial tensile resistance of the surface of each example.

In addition, Table 1 shows the results of measuring the maximum nitrification rate by performing wastewater treatment using the obtained hollow fiber membrane module.

[Table 1]

| | Hollow fiber membrane | | Maximum nitrification rate [g/m²·d] |
|---|---|---|---|
| | Arithmetic average roughness (SRa) of surface [nm] | Initial tensile resistance [cN/dtex] | |
| Example 1 | 55.5 | 2.5 | 0.60 |
| Comparative Example 1 | 18.0 | 38.0 | 0.26 |
| Comparative Example 2 | 21.5 | 31.9 | 0.10 |
| Comparative Example 3 | 57.5 | 0.1 | 0.09 |

As shown in Table 1, in Example 1 in which a hollow fiber membrane with an appropriate arithmetic average roughness (SRa) of the surface and an appropriate initial tensile resistance was used, the maximum nitrification rate was faster and the wastewater treatment capacity was higher than in Comparative Examples 1 to 3 in which a hollow fiber with at least one of an inappropriate arithmetic average roughness (SRa) of the surface or an inappropriate initial tensile resistance was used.

REFERENCE SIGNS LIST

1 Hollow fiber membrane
10 Hollow fiber membrane module
11 Hollow fiber membrane sheet type article
12 Housing
12A Upper housing
12B Lower housing
100 Wastewater treatment device
110 Treatment tank
120 Gas supply line
W Wastewater

**Claims**

1. A hollow fiber membrane for wastewater treatment, in which a microorganism layer derived from microorganisms or bacteria in wastewater is formed on a surface during the wastewater treatment,

   wherein an arithmetic average roughness (SRa) of the surface measured by the following arithmetic average roughness measuring method is 25 nm or more, and
   an initial tensile resistance obtained in accordance with JIS L 1013:2010 is 0.5 to 20 cN/dtex,
   (arithmetic average roughness measuring method)
   an uneven shape of the surface of the hollow fiber membrane is measured using a scanning probe microscope (SPM), a cross-sectional curved surface of the hollow fiber membrane is denoted as y = f(x, y), and the arithmetic average roughness (SRa) is obtained by obtaining an absolute value average of f(x, y) from the following expression (1),

$$\mathrm{SRa} = \frac{1}{LM} \int_0^M \int_0^L |f(x,y)| dxdy \quad \cdots (1)$$

(in expression (1), L is a length in an x direction in the cross-sectional curved surface, and M is a length in a y direction in the cross-sectional curved surface).

2. The hollow fiber membrane according to Claim 1,
   wherein the hollow fiber membrane consists of a material containing a polyolefin resin.

3. The hollow fiber membrane according to Claim 2,
   wherein the polyolefin resin is a polyethylene resin.

4. The hollow fiber membrane according to Claim 3,
   wherein the polyethylene resin is low-density polyethylene.

5. The hollow fiber membrane according to any one of Claims 1 to 4,
   wherein the hollow fiber membrane is a monolayer membrane consisting of a non-porous layer.

6. The hollow fiber membrane according to any one of Claims 1 to 5,
   wherein the outer diameter is 1 mm or less.

7. A hollow fiber membrane module, comprising:
   the hollow fiber membrane according to any one of Claims 1 to 6.

8. A wastewater treatment device, comprising:
   the hollow fiber membrane module according to Claim 7.

9. A wastewater treatment method for treating wastewater using the hollow fiber membrane module according to Claim 7
   or the wastewater treatment device according to Claim 8, the wastewater treatment method comprising:

   forming the microorganism layer derived from microorganisms or bacteria in wastewater on a surface of the
   hollow fiber membrane; and
   supplying a gas containing oxygen to a hollow portion of the hollow fiber membrane.

## FIG. 1

# INTERNATIONAL SEARCH REPORT

| International application No. |
|---|
| **PCT/JP2022/044226** |

**A. CLASSIFICATION OF SUBJECT MATTER**

***B01D 63/02***(2006.01)i; ***C02F 3/00***(2023.01)i; ***C02F 3/34***(2023.01)i
FI: B01D63/02; C02F3/00 G; C02F3/34 101

According to International Patent Classification (IPC) or to both national classification and IPC

**B. FIELDS SEARCHED**

Minimum documentation searched (classification system followed by classification symbols)

B01D53/22; B01D61/00-71/82; C02F1/44; C02F3/00; C02F3/28-3/34; D01F1/00-6/96; D01F9/00-9/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-76893 A (MITSUBISHI CHEM. AQUA SOLUTIONS CO., LTD.) 23 May 2019 (2019-05-23) claims, examples | 1-9 |
| A | JP 2010-253397 A (SUMITOMO ELECTRIC IND., LTD.) 11 November 2010 (2010-11-11) claims | 1-9 |
| A | JP 2003-251381 A (ASAHI KASEI CORP.) 09 September 2003 (2003-09-09) claims, examples | 1-9 |
| A | JP 2010-284617 A (EIDENSHA KK) 24 December 2010 (2010-12-24) claims, examples | 1-9 |
| A | JP 2021-130103 A (MITSUBISHI CHEMICAL CORP.) 09 September 2021 (2021-09-09) claims | 1-9 |
| A | WO 2019/163429 A1 (KURITA WATER INDUSTRIES, LTD.) 29 August 2019 (2019-08-29) claims | 1-9 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 December 2022** | **10 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/044226**

| Patent document cited in search report | | | Publication date (day/month/year) | Patent family member(s) | | | Publication date (day/month/year) |
|---|---|---|---|---|---|---|---|
| JP | 2019-76893 | A | 23 May 2019 | (Family: none) | | | |
| JP | 2010-253397 | A | 11 November 2010 | (Family: none) | | | |
| JP | 2003-251381 | A | 09 September 2003 | (Family: none) | | | |
| JP | 2010-284617 | A | 24 December 2010 | (Family: none) | | | |
| JP | 2021-130103 | A | 09 September 2021 | (Family: none) | | | |
| WO | 2019/163429 | A1 | 29 August 2019 | TW | 201934498 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021062331 A